# EUROPÄISCHE PATENTSCHRIFT

(11) **EP 3 141 318 B1**
(45) Veröffentlichungstag und Bekanntmachung des Hinweises auf die Patenterteilung: **18.03.2020**
(21) Anmeldenummer: 16182856.1
(22) Anmeldetag: 04.08.2016
(51) Int. Cl.: B21J 15/32

(54) **WECHSELMAGAZIN SOWIE SYSTEM UND VERFAHREN ZUM BELADEN EINES WECHSELMAGAZINS UND EINES SETZGERÄTS**
EXCHANGEABLE MAGAZINE, SYSTEM AND METHOD FOR LOADING AN EXCHANGEABLE MAGAZINE AND A SETTING DEVICE
CHARGEUR, SYSTEME ET PROCEDE DE CHARGEMENT D'UN CHARGEUR ET D'UN APPAREIL DE POSE

(30) Priorität: 14.09.2015 DE 102015115483
(43) Veröffentlichungstag der Anmeldung: 15.03.2017
(73) Patentinhaber: Böllhoff Verbindungstechnik GmbH, 33649 Bielefeld (DE)
(72) Erfinder: Münstermann, Jörg, 33335 Gütersloh (DE); Ziebart, Jan-Robert, 33824 Werther (DE)
(74) Vertreter: HWP Intellectual Property

(56) Entgegenhaltungen:
- EP-A1- 1 916 044
- DE-A1-102005 015 032
- DE-A1-102006 036 981
- DE-A1-102009 040 764
- DE-A1-102014 011 608

## Beschreibung

### 1. Gebiet der Erfindung

Die vorliegende Erfindung betrifft ein Wechselmagazin, in dem eine Mehrzahl von Verbindungselementen an eine Mehrzahl von definierten Positionen speicherbar ist. Dieses Wechselmagazin wird bevorzugt in Kombination mit Fügewerkzeugen, wie bspw. einem Setzgerät für Verbindungselemente wie Stanzniete, Schweißbolzen, Bolzen, Nägel, Schweißmuttern, Schrauben und dgl. eingesetzt. Des Weiteren betrifft vorliegende Erfindung ein Liefersystem mit obigen Komponenten, ein Verfahren zum Laden eines Setzgeräts mithilfe dieses Wechselmagazins sowie ein Verfahren zum Betrieb eines Setzgeräts, das mit obigem Wechselmagazin ausgestattet worden ist.

### 2. Hintergrund der Erfindung

Im Stand der Technik sind verschiedene Magazinkonstruktionen zur Speicherung einer Vielzahl von Fügeelementen bekannt. Diese werden bspw. in Kombination mit auf dem Bau verwendeten Nagelvorrichtungen oder dergleichen eingesetzt. Ein Beispiel für ein derartiges Magazin zeigt US 2,216,403. Hier sind die Nägel in einem kreisförmigen Magazin in strahlenförmig verlaufenden Nuten angeordnet. Diese Nuten gehen in einem zentralen Punkt des Magazins in eine Überführungsschiene über, so dass die Nägel über diesen Weg dem Werkzeug zugeführt werden. Diese Konstruktion hat neben ihrem großen Platzbedarf den Nachteil, dass keine selektive Entnahme einzelner Verbindungselemente möglich ist.

Vielmehr geht es bei dieser Anordnung darum, möglichst viele Verbindungselemente innerhalb des Magazins zu speichern, um sie danach ohne Unterbrechung verarbeiten zu können.

DE 10 2006 036981 A1 bildet die Basis für den Oberbegriff des Anspruchs 1.

DE 10 2005 015 032 A1 beschreibt ein Magazin in Kombination mit einem Setzgerät, in dem bereits die Fügeelemente vereinzelt und zur Verarbeitung im Setzgerät passend angeordnet gespeichert sind. Dazu ist eine Scheibe mit einer Vielzahl umfänglich angeordneter Kammem vorgesehen. Jeweils ein Hilfsfügeteil wird in jeder Kammer lageorientiert angeordnet. Um es dem Setzgerät zur Verfügung zu stellen, wird dieses Fügeelement jeweils einzeln dem Setzgerät zur Verarbeitung zugeschossen. Dies erfolgt bspw. unter der Verwendung von Druckluft und einem passenden Profilschlauch, der in seiner inneren Kontur an die Abmessungen des zu fügenden Niets angepasst ist. Die hier in Kombination mit dem Setzgerät eingesetzte Magazinscheibe wird über einen Zuführkanal mit Fügeelementen beladen und über einen gegenüberliegend zum Zuführkanal angeordneten Entladekanal entladen. Zudem erfolgt die Verarbeitung der in diesem Magazin gespeicherten Fügeelemente nacheinander Kammer für Kammer. Um die Verarbeitung der Fügeelemente im Setzgerät zu erleichtern, werden die Fügeelemente innerhalb der Kammern mit ihrer Längsachse parallel zur Drehachse des Magazins orientiert angeordnet.

WO 2007/031701 A1 beschreibt eine Beladestation, in der ein Magazin für ein Setzgerät mit einer entsprechenden Menge von Fügeelementen ausgestattet ist. Nachdem das Magazin gefüllt worden ist, übernimmt das Setzgerät bspw. mithilfe eines Roboters das befüllte Magazin, um nachfolgend die darin gespeicherten Fügeelemente zu verarbeiten. Die im Magazin bereitgestellten Fügeelemente sind in einer Reihe nacheinander in dafür vorgesehenen Kammern angeordnet. Entsprechend erfolgt auch die Verarbeitung dieser Fügeelemente nacheinander, da für die hier genutzte Speicherschiene lediglich eine axiale Ausgabeöffnung für die Fügeelemente vorgesehen ist.

WO 00/07751 beschreibt die Vorbereitung von unterschiedlichen Gruppen und Typen von Verbindungselementen, um eine Verarbeitung dieser Verbindungselemente effektiver zu gestalten. Die Vorkonfektionierung von Verbindungselementen erfolgt in sogenannten Nietpaketen, in denen die bevorzugten Gruppierungen und Typzusammenstellungen der Verbindungselemente bspw. in entsprechenden Kunststoffbehältern eingeschweißt sind. Diese Pakte von Fügeelementen stellen somit eine Alternative zur Nutzung von Magazinen oder Wechselmagazinen dar.

DE 10 2009 040 764 A1 beschreibt ein Wechselmagazin zur Versorgung eines Setzgeräts. Dieses Wechselmagazin verfügt über einen umlaufend angeordneten Zahnriemen, in dessen Zahnzwischenräumen jeweils ein Fügeelement angeordnet werden kann. Diese Fügeelemente werden über eine Zuführöffnung dem Zahnriemen zugeführt. Nachdem das volle Wechselmagazin mit einem Setzgerät kombiniert worden ist, werden die zu verarbeitenden Stanzniete durch die Zufuhröffnung einer Verarbeitung zugeführt. Auch diese Anordnung des Wechselmagazins hat den Nachteil, dass die einzelnen Kammern des umlaufenden Zahnriemens nacheinander abgearbeitet werden müssen, was die Flexibilität des Setzgeräts und die im Wechselmagazin gespeicherten Fügeelemente einschränkt.

Die Basis für den Oberbegriff des Patentanspruchs 1 bildet DE 10 2006 036 981 A1, die ein Verfahren und eine Vorrichtung zum Befestigen eines Befestigungselements an einem Werkstück betrifft. Das Verfahren zum Befestigen eines Befestigungselements an einem Werkstück mittels eines Montageroboters in einer Bearbeitungsstation, bei dem der Montageroboter mindestens ein stückiges Befestigungselement an dem Werkstück während eines Befestigungszyklus befestigt, umfasst die Schritte: Bereitstellen des Werkstücks in der Bearbeitungsstation, Fördern von Befestigungselementen aus einem Vorratsbehälter in ein Verbindungswerkzeug, das ein Teil einer Konsole ist, die durch eine Steckkupplung mit einem Roboterarm des Montageroboters verbunden ist, Laden eines Befestigungselements in das Verbindungswerkzeug, Anordnen des geladenen Befestigungselements auf einem vorbestimmten Befestigungsbereich des Werkstücks, Befestigen des Befestigungselements an dem Werkstück durch Betätigen des Verbindungswerkzeugs, und Bestücken eines Vormagazins der Fördereinrichtung mit Befestigungselementen aus dem Vorratsbehälter mittels einer Bestückungseinrichtung der Fördereinrichtung während eines Befestigungszyklus, und Übertragen der Befestigungselemente aus dem Vormagazin in ein Magazin der Konsole mittels einer Übertragungseinrichtung der Fördereinrichtung zwischen zwei Befestigungszyklen.

Es ist daher die Aufgabe vorliegender Erfindung, ein Wechselmagazin für die Kombination mit einem Fügewerkzeug vorzuschlagen, mit dem sich Fügevorgänge effektiver gestalten lassen.

### 3. Zusammenfassung der Erfindung

Die obige Aufgabe wird durch ein Wechselmagazin gemäß dem unabhängigen Patentanspruch 1, durch ein Setzgerät mit diesem Wechselmagazin gemäß Patentanspruch 9, durch ein Liefersystem zur Versorgung eines Setzwerkzeugs mit Fügeelementen gemäß Anspruch 10, durch ein Verfahren zum Laden eines Setzgeräts mithilfe des Wechselmagazins gemäß dem unabhängigen Patentanspruch 11 sowie durch ein Verfahren zum Betrieb eines Setzgeräts mit diesem Wechselmagazin gemäß dem unabhängigen Patentanspruch 15 gelöst. Vorteilhafte Ausgestaltungen und Weiterentwicklungen vorliegender Erfindung ergeben sich aus der folgenden Beschreibung, den begleitenden Zeichnungen und den anhängenden Patentansprüchen.

Vorliegende Erfindung umfasst ein Wechselmagazin gemäß dem unabhängigen Patentanspruch 1. In dem Wechselmagazin ist eine Mehrzahl von Verbindungselementen an einer Mehrzahl von definierten Positionen abführbar speicherbar, wobei das Wechselmagazin mit einer Ladestation und einem Setzgerät zur Übergabe und Entnahme von Verbindungselementen verbindbar ist. Das erfindungsgemäße Wechselmagazin weist die folgenden Merkmale auf: eine Speicherplatte mit einer Mehrzahl definiert angeordneter und nur einseitig offener Kammern, deren Form an ein aufzunehmendes Verbindungselement, insbesondere an eine Art eines aufzunehmenden Verbindungselements, angepasst ist, sodass mindestens ein Verbindungselement darin lageorientiert speicherbar ist, eine Verschlusskomponente, die die Mehrzahl gleichmäßig angeordneter Kammern derart verschließt, dass zumindest für ein Entladen der Mehrzahl definiert angeordneter Kammern, vorzugsweise zum Entladen in Richtung eines Setzgeräts zum Zwecke der Zufuhr eines Verbindungselements zum Fügekanal des Setzgeräts, nur eine Kammer geöffnet ist, wobei die Speicherplatte und die Verschlusskomponente gegeneinander drehbar und/oder schwenkbar und/oder verschiebbar sind, so dass die jeweilige Kammer relativ zur Kammeröffnung derart bewegbar ist, dass zumindest ein kammerspezifisches Entladen der jeweiligen Kammer über die Kammeröffnung erfolgt.

Das erfindungsgemäße Wechselmagazin ist Bestandteil eines Liefersystems, um ein Fügewerkzeug wie bspw. ein Setzgerät für Stanzniete, mit einer bestimmten Menge und einer gezielten Auswahl von definierten Fügeelementen zu versorgen. Zu diesem Zweck werden die Fügeelemente bevorzugt in definierten und identifizierbaren Kammern angeordnet, aus denen sie einzeln zum Verarbeiten wieder entnehmbar sind. Diese Anordnung der individualisierten Kammern zur Speicherung der Fügeelemente eröffnet die Möglichkeit, dass neben einer vorgewählten Anzahl von Fügelementen auch unterschiedliche Typen oder Arten von Fügeelementen innerhalb nur eines Wechselmagazins speicherbar sind. Wenn somit im Rahmen des Liefersystems das Wechselmagazin mit unterschiedlichen Anzahlen und unterschiedlichen Typen von Fügeelementen bestückt wird, ist trotz unterschiedlicher Fügeaufgaben die Versorgung des Setzgeräts mit Fügeelementen aus dem nur einen Wechselmagazin garantiert. Daraus folgt, dass die Konfiguration des Wechselmagazins und die entsprechende individuelle Befüllung oder Beladung der Kammern des Wechselmagazins häufig notwendige Magazinwechsel für unterschiedliche Typen von Fügeelementen überflüssig machen.

Die bevorzugte Speicherplatte des Wechselmagazins weist die Mehrzahl definiert angeordneter und nur einseitig offener Kammer zur Speicherung jeweils mindestens eines Fügeelements auf. Die definierte Anordnung dient dazu, dass die einzelnen Kammern identifizierbar und somit gezielt beladbar und/oder entladbar sind. Zu diesem Zweck ist es bspw. bevorzugt, die einzelnen Kammern mithilfe eines Koordinatensystems auf der Speicherplatte zu individualisieren, sodass bspw. in einem Industriecomputer oder in einem ähnlichen Speichergerät die Informationen zur Position und zur Art und/oder Menge der Beladung der einzelnen Kammern individualisiert gespeichert werden können. Es ist daher bevorzugt, die in der Speicherplatte vorhandenen Kammern durch Polarkoordinaten zu identifizieren. Dazu ist mit einem Schrittmotor die Speicherplatte in einem bestimmten Winkel drehbar, während ein linearer Versatz der Kammeröffnung in radialer Richtung erfolgt. In gleicher Weise können auch andere bekannte Koordinatensysteme die Kammerposition definieren.

Zudem ist es bevorzugt, die Kammern in ihrer Gestalt und Dimension an die aufzunehmenden Fügeelemente anzupassen. Dies ergibt die Möglichkeit, dass die Fügeelemente in den einzelnen Kammern lageorientiert gehalten werden. Fügeelemente sind in diesem Zusammenhang vorzugsweise Stanzniete, Bolzen, Schweißbolzen, und -muttern, Nägel, Schweißschrauben, sowie andere mit Setzgeräten zu verarbeitende Fügeelemente. Diese Fügeelemente werden bevorzugt aus Vorratsbehältern zugeführt. Die Vorratsbehälter enthalten jeweils nur Fügeelemente eines definierten Typs, dessen Dimensionen und Eigenschaften bekannt sind.

Erfindungsgemäß, um die einzelnen Kammern gezielt be- und entladen zu können, ist eine bewegbare Kammeröffnung vorgesehen. Diese Kammeröffnung bewegt sich relativ zu der Mehrzahl von Kammern, sodass jede Kammer gezielt anfahrbar, befüllbar oder ein dort gespeichertes Fügeelement entnehmbar ist. Die Relativbewegung zwischen Kammeröffnung und der Mehrzahl von Kammern wird vorzugsweise auf unterschiedliche Art und Weise realisiert. Gemäß einer Möglichkeit sind sämtliche Kammern durch eine deckelähnliche Komponente verschlossen. Diese deckelähnliche Komponente enthält die oben genannte Kammeröffnung. Unterhalb dieser deckelähnlichen Komponente und somit auch unterhalb der Kammeröffnung ist die Speicherplatte durch Drehen und/oder geradlinige Bewegungen derart bewegbar, dass die einzelnen Kammern gezielt zur Kammeröffnung bewegt werden können. In gleicher Weise ist es möglich, dass die Speicherplatte mit der Mehrzahl von Kammern feststeht und lediglich die Deckelkomponente mit Kammeröffnung bewegbar angeordnet ist. Gemäß einer weiteren Alternative ist es bevorzugt, dass sich sowohl die Deckelkomponente wie auch die Speicherplatte mit der Mehrzahl von Kammern bewegen, um die Kammeröffnung und die einzelnen Kammern relativ zueinander auszurichten.

Gemäß einer bevorzugten Ausgestaltung vorliegender Erfindung ist die Speicherplatte eine drehbare Scheibe mit einer Dicke parallel zu einer Drehachse und die Kammern sind mit einer Längsachse parallel oder senkrecht zur Drehachse innerhalb der Speicherplatte angeordnet.

Gemäß einer weiteren bevorzugten Ausführungsform vorliegender Erfindung sind die Kammern in einem oder einer Mehrzahl konzentrischer Kreise gleichmäßig um die Drehachse der Speicherplatte angeordnet. Es ist ebenfalls bevorzugt, strahlenförmige oder spiralförmige Anordnungen der Kammern vorzunehmen, solange die einzelnen Positionen der Kammern identifizierbar bzw. definierbar sind. Diese Identifikation erfolgt vorzugsweise über ein Koordinatensystem mit kartesischen oder Polarkoordinaten, in dem sich die Kammeröffnung und/oder die Kammern bewegen, wie es oben beschrieben worden ist. Gemäß einer weiteren bevorzugten Ausführungsform sind die Kammern matrixartig angeordnet.

Um die an das Setzgerät zu übergebenden Fügeelemente speichern zu können, steht die gesamte Speicherplatte zur Anordnung der einzelnen Kammern zur Verfügung. Daher ist es bevorzugt, die Kammern in einer gleichmäßigen oder regelmäßigen Anordnung mit gleichen Abständen zueinander über die gesamte Speicherplatte zu verteilen. Diese Anordnung kann aus konzentrischen Kreisen von nebeneinander platzierten Kammern um die Drehachse bestehen. In gleicher Weise ist es aber auch denkbar, die Kammern entlang von Geraden nebeneinander zu platzieren, sodass diese ähnlich einem Schachbrettmuster oder einem Strahlenmuster auf der Speicherplatte verteilt angeordnet sind.

Um die Zufuhr und die Entnahme der in den Kammern gespeicherten Fügeelementen auf die Beladestation und/oder das Setzgerät abzustimmen, sind die Kammern vorzugsweise mit ihrer Längsachse parallel oder senkrecht zur Drehachse der Scheibe angeordnet. Entsprechend ergibt sich eine Anordnung für die Fügeelemente bezogen auf deren Längsachse parallel oder senkrecht zur Drehachse der Scheibe. Gemäß einer weiteren bevorzugten Ausgestaltung vorliegender Erfindung sind die Kammern von einer Außenseite zugänglich. Vorzugsweise ist eine Längsachse der Kammer parallel oder schräg oder senkrecht zur Drehachse der Speicherplatte angeordnet, sodass ein Verbindungselement in einer Richtung parallel oder winklig zur Drehachse der Speicherplatte zumindest aus einer definiert angeordneten Kammer entfernbar ist, vorzugsweise auch einer definiert angeordneten Kammer zuführbar ist. Gemäß einer weiteren Ausführungsform ist ein geladenes Verbindungselement in einer Richtung parallel zur Drehachse der Speicherplatte durch Druckluft unterstützt aus einer Kammer entfernbar oder einer Kammer zuführbar ist. Entsprechend dieser bevorzugten Anordnung sind die Fügeelemente mit ihrer Längsachse parallel zum Radius einer bspw. runden oder rotationssymmetrischen oder polygonalen Speicherplatte angeordnet. Die Beladung der Kammern sowie die Entnahme der Fügeelemente aus den einzelnen Kammern erfolgt aber nicht in radialer Richtung sondern durch die Kammeröffnung in axialer Richtung bezogen auf die Drehachse der Speicherplatte oder in einem Winkel zur Drehachse der Speicherplatte. Dieses Be- und Entladen wird gemäß einer bevorzugten Ausführungsform vorliegender Erfindung durch Druckluft unterstützt. Das bedeutet, dass bspw. die einer Kammer zuzuführenden Fügeelemente mithilfe von Druckluft durch einen Profilschlauch bewegt werden, bis sie in der Kammer eingetroffen sind. Dabei wird das mindestens eine Fügeelement in Beladerichtung der Kammer zugeführt. Vorzugsweise sind an der Speicherplatte Druckluftkanäle vorgesehen, die eine Öffnung in die einzelnen Kammern aufweisen. Sobald ein Überdruck an diese Druckluftleitungen angeschlossen wird, wird Luft entgegen der Beladerichtung in die einzelnen Kammern oder ausgewählte Kammern oder in alle Kammern eingeblasen. Diese Luftdüsen unterstützen somit ein Bewegen der in den einzelnen Kammern gespeicherten Fügeelemente in Entladerichtung. In gleicher Weise ist es bevorzugt, die Fügeelemente in den Kammern unter Federvorspannung zu setzen, um ein Entladen zu unterstützen.

Es ist weiterhin bevorzugt, die Speicherplatte eckig auszubilden und die Kammern entlang von parallelen und/oder senkrecht zueinander verlaufenden Geraden regelmäßig verteilt anzuordnen. Die Kammeröffnung ist dann vorzugsweise mithilfe eines oder mehreren linearen Stellgliedern individuell über ausgewählten Kammern positionierbar. Es ist ebenfalls denkbar, diese Positionierung der Kammeröffnung mithilfe einer Drehung und/oder einer linearen Bewegung in Kombination mit einer Drehung oder nur mit einer linearen Bewegung der Verschlusskomponente zu realisieren. Um diese Bewegungen umzusetzen, sind normale Motoren, drehende Schrittmotoren, Linearantriebe und/oder Piezoantriebe bevorzugt. Gemäß einer bevorzugten Ausführungsform ist die Speicherplatte mit den definiert angeordneten Kammern relativ zu der mindestens einen Kammeröffnung mittels Schrittmotor und/oder Linearantrieb bewegbar.

Gemäß einer weiteren bevorzugten Ausführungsform vorliegender Erfindung weist die Speicherplatte mindestens eine langlochähnliche Kammer auf, in denen jeweils ein oder mehrere Verbindungselemente anordenbar sind, wobei mindestens ein Verbindungselement mit einer Längsachse senkrecht oder parallel oder winklig zur Drehachse der Speicherplatte innerhalb der langlochähnlichen Kammer angeordnet ist.

Des Weiteren umfasst vorliegende Erfindung ein Setzgerät, das mit dem oben beschriebenen Wechselmagazin ausstattbar und betreibbar ist.

Zudem umfasst vorliegende Erfindung das bereits oben genannte Liefersystem zur Versorgung eines Setzwerkzeugs mit einer Mehrzahl von Fügeelementen mithilfe des oben genannten Wechselmagazins. Das Liefersystem weist die folgenden Merkmale auf: eine automatische Beladestation mit mindestens einer Andockstelle für das Wechselmagazin zum Beladen des Wechselmagazins mit Fügeelementen aus einem oder mehreren Vorratsbehältern, in welchen jeweils eine Mehrzahl gleichartiger Verbindungselemente ungeordnet oder ausgerichtet zur Verfügung steht, sodass die Verbindungselemente dem Wechselmagazin zu einzelnen Kammern oder zu Gruppen von Kammern nacheinander einzeln oder als Mehrzahl zuführbar sind, einen dreh- und/oder schwenkbaren- und/oder versetzbar angeordneten Manipulator , an dem mindestens ein Wechselmagazin befestigbar und von dem das Wechselmagazin lösbar ist zum Andocken des zu beladenden Wechselmagazins an der Beladestation, zum Abdocken des beladenen Wechselmagazins von der Beladestation, vorzugsweise zum Halten mindestens eines beladenen und/oder zu beladenen Wechselmagazins zum Andocken des beladenen Wechselmagazins an dem Setzgerät und zum Abdocken des entladenen Wechselmagazins vom Setzgerät. Das Wechselmagazin umfasst eine Speicherplatte mit einer Mehrzahl definiert angeordneter Kammern und eine Verschlusskomponente, in der die Verschlusskomponente die Mehrzahl definiert angeordneter Kammern derart verschließt, dass zumindest für ein Entladen der Mehrzahl definiert angeordneter Kammern nur eine Kammer geöffnet ist, indem die Speicherplatte und die Verschlusskomponente gegeneinander drehbar und/oder schwenkbar und/oder verschiebbar angeordnet sind, wobei das Wechselmagazin rotierbar, scheibenartig und/oder versetzbar ist und eine Mehrzahl von Kammern aufweist, sodass zumindest und das Entladen der Kammern am Setzwerkzeug durch eine einzige für das Verbindungselement vorhandene Öffnung der jeweils in Be- bzw. Entladeposition befindlichen Kammer realisierbar ist.

Vorliegende Erfindung offenbart zudem ein Verfahren zum Laden eines Setzgeräts mithilfe eines Wechselmagazins gemäß den oben beschriebenen Ausführungsformen. Dieses Verfahren weist die folgenden Schritte auf: Füllen einer Mehrzahl von Kammern des Wechselmagazins einzeln oder in Gruppen jeweils mit einem Verbindungselement an einer Beladestation, Erfassen einer abrufbaren Information, welche Kammer des Wechselmagazins ein Verbindungselement welcher Art enthält, Lösen des Wechselmagazins von der Beladestation, Verbinden des Wechselmagazins mit einem Setzgerät und Übermitteln der abrufbaren Information an das Setzgerät, so dass zur Vorbereitung eines Fügevorgangs ein bestimmtes Fügeelement aus einer definierten Kammer gezielt entladbar und dem Setzgerät zuführbar ist, vorzugsweise wie viele und/oder welche und/oder in welchen Kammern des Wechselmagazins Verbindungselemente gespeichert sind.

Wie oben bereits im Zusammenhang mit dem Liefersystem beschrieben worden ist, wird zunächst ein Wechselmagazin an eine Beladestation übergeben und dort befüllt. Das Übergeben des Wechselmagazins an die Beladestation erfolgt vorzugsweise mithilfe eines Manipulators, der ein leeres Wechselmagazin von einem Setzgerät übernimmt und durch eine lineare, eine schwenk- und/oder eine kombinierte lineare und Schwenkbewegung an die Beladestation überführt. Es ist bevorzugt, mit jedem Wechselmagazin auch die nötigen Informationen zu übermitteln, welche Kammern beladen oder entladen sind und vorzugsweise welche Arten und wie viele Verbindungselemente in den einzelnen Kammern angeordnet sind. Mit dieser Information ausgestattet ist die Beladestation in der Lage, gezielt diejenigen Kammern mit Verbindungselementen neu zu beladen, in denen keine Verbindungselemente mehr enthalten sind.

Es ist ebenfalls bevorzugt, den Manipulator mit einem maschinell vorbefüllten Wechselmagazin zu bestücken. Gemäß einer weiteren bevorzugten Ausführungsform wird das Wechselmagazin mittels eines Zwischenspeichers befüllt. Der Zwischenspeicher belädt dabei bevorzugt alle Kammern oder 50 - 80 % der Kammern in nur einem Schritt. Nachdem das Wechselmagazin in der Beladestation mit Verbindungselementen beladen worden ist, wird wiederum mithilfe des Manipulators das Wechselmagazin an das Setzgerät übergeben. Gleichzeitig mit dem Übergeben des Wechselmagazins werden vorzugsweise auch die Informationen an das Setzgerät übermittelt, in welchen Kammern welche Verbindungselemente angeordnet sind. Diese Informationsübermittlung erfolgt vorzugsweise mit einem Transponder, der auf dem Wechselmagazin angeordnet ist und die nötigen Informationen enthält. Es ist ebenfalls bevorzugt, diese Informationen in einem Industriecomputer abzulegen, von dem das Setzgerät diese Informationen wiederum basierend auf einer Datenverbindung abrufen kann. Gemäß weiterer bevorzugter Ausführungsformen wird die Information zum Inhalt der Kammern des an das Setzgerät übergebenen Wechselmagazins optisch, bspw. mittels Strich- oder Nummerncode, mechanisch, bspw. mittels geprägtem Code oder auf andere denkbare Weise übermittelt.

Gemäß einer weiteren bevorzugten Ausführungsform des vorliegenden Verfahrens erfolgt während des Beladens des Wechselmagazins ein elektronisches Erfassen, welches Verbindungselement in welcher Kammer des Wechselmagazins gespeichert ist. Diese Information wird abrufbar in einem Transponder oder Computer gespeichert. Des Weiteren ist bevorzugt, dass das Wechselmagazin mithilfe des Manipulators automatisch von der Beladestation zum Setzgerät und vom Setzgerät zur Beladestation überführt wird. Es ist ebenfalls bevorzugt, das Wechselmagazin zwischen Beladestation und Setzgerät manuell zu überführen.

Vorliegende Erfindung umfasst zudem ein Verfahren zum Betrieb eines Setzgeräts mit einem Wechselmagazin gemäß einer der oben beschriebenen Ausführungsformen. Das Verfahren weist die folgenden Schritte auf: Auswählen eines Verbindungselements passend für eine Fügeaufgabe aus einer Mehrzahl von Verbindungselementen, die in einem Wechselmagazin gespeichert sind, Entladen des ausgewählten Verbindungselements aus einer definiert angeordneten Kammer des Wechselmagazins basierend auf einer abrufbaren Information für das ausgewählte Verbindungselement in das Setzgerät und Herstellen einer Fügeverbindung mit dem ausgewählten Verbindungselement. Gemäß einer weiteren bevorzugten Ausführungsform des erfindungsgemäßen Verfahrens wird das Fügeelement aus einer Mehrzahl unterschiedlicher Fügeelemente ausgewählt und aus deren entsprechender Kammer des Wechselmagazins entnommen. Dann erfolgt die Zufuhr dieses speziellen Fügeelements zum Setzgerät, um die Verbindung herzustellen.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Fig. 1: eine schematische Seitenansicht einer bevorzugten Ausführungsform des Manipulators in Kombination mit einer Ladestation und einem Setzgerät,
- Fig. 2: eine bevorzugte Ausführungsform des Manipulators mit Ladestation und Setzgerät,
- Fig. 3: ein bevorzugtes Setzgerät mit einem darin installierten Wechselmagazin gemäß einer Ausführungsform vorliegender Erfindung,
- Fig. 4: eine vergrößerte Darstellung einer bevorzugten Ausführungsform des bevorzugten Manipulators gemäß einer weiteren bevorzugten Ausführungsform vorliegender Erfindung,
- Fig. 5: eine schematische Darstellung einer bevorzugten Ladestation in Kombination mit Teilen des bevorzugten Wechselmagazins,
- Fig. 6: eine vergrößerte Darstellung der Ladestation des Wechselmagazins gemäß Fig. 5,
- Fig. 7: eine vergrößerte schematische Darstellung von Bestandteilen des erfindungsgemäß bevorzugten Wechselmagazins,

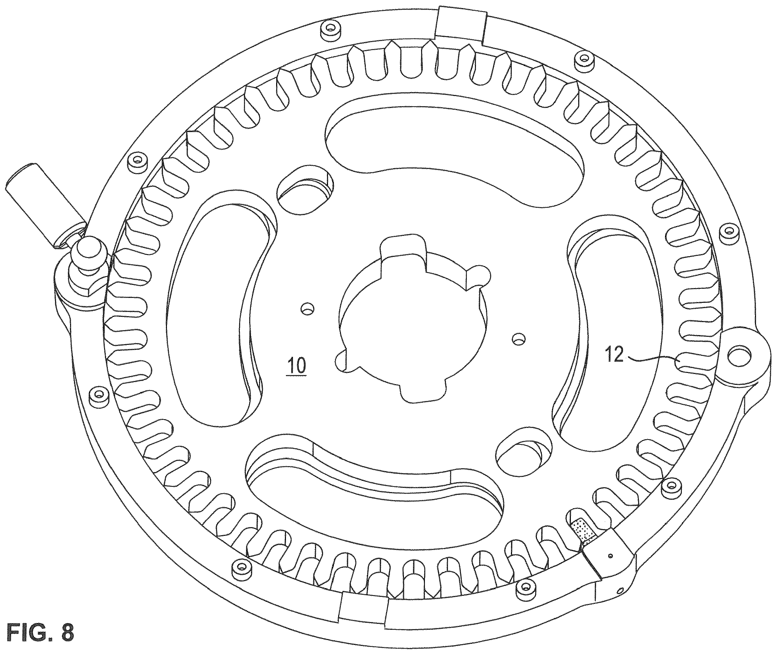

- Fig. 8: eine schematische Darstellung von Bestandteilen des bevorzugten Wechselmagazins und
- Fig. 9: eine Ausschnittsvergrößerung des bevorzugten Wechselmagazins zur Illustration der Luftzufuhr zu den Kammern des Wechselmagazins.

### 5. Detaillierte Beschreibung der bevorzugten Ausführungsformen

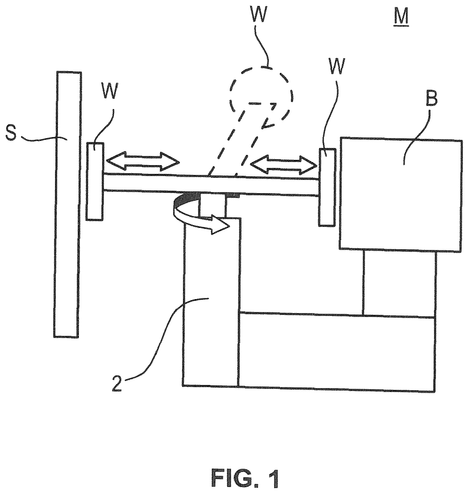

Fig. 1 zeigt die schematische Darstellung eines Manipulators M. Dieser verfügt über eine Bewegungsanordnung 2, mit der zumindest ein erstes Wechselmagazin W bewegbar ist. Bevorzugt sind zwei, drei (siehe gestrichelte Darstellung) oder vier (nicht dargestellt) Wechselmagazine W an der Bewegungsanordnung 2 lösbar befestigt. Die Bewegungsanordnung 2 übernimmt ein beladenes Wechselmagazin W an einer Beladestation B, wo das Wechselmagazin W mit Fügeelementen N beladen worden ist. Es ist ebenfalls bevorzugt, ein vorbefülltes Wechselmagazin W am Manipulator M zu befestigen. Bevorzugt werden ein oder mehrere Wechselmagazine W am Manipulator M zeitweilig gehalten, zwischengeparkt oder allgemein temporär gehalten, bis sie vom Setzgerät S angefordert werden.

Von dort bewegt die Bewegungsanordnung 2 das Wechselmagazin W durch Kombination einer linearen und einer Schwenkbewegung von der Beladestation B zu einem Setzgerät S. Nach der Schwenkbewegung der Bewegungsanordnung 2, die durch den roten Pfeil angedeutet ist, wird das Wechselmagazin W über eine Linearbewegung zum Setzgerät S am Setzgerät S angedockt. Die Überführung des teilweise oder vollständig entladenen Wechselmagazins W zur Beladestation B erfolgt entsprechend in umgekehrter Richtung.

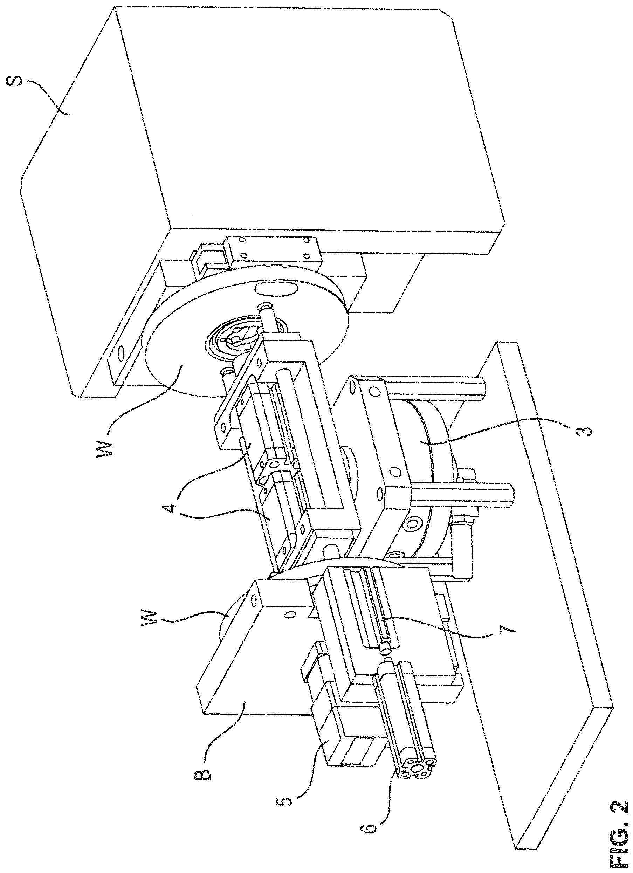

Eine bevorzugte Ausführungsform des Manipulators M zeigt Fig. 2 in einer perspektivischen Seitenansicht. Die Bewegungsanordnung 2 verfügt über einen zentralen Schwenkantrieb 3 und zwei in entgegengesetzter Richtung wirkende Linearantriebe 4. Die Linearantriebe 4 dienen dem An- und Abdocken des Wechselmagazins W an der Beladestation B und am Setzgerät S, indem sie die Wechselmagazine W vom Setzgerät S oder der Beladestation B abziehen oder an diese ankoppeln. Der Schwenkantrieb 3 tauscht durch eine Schwenkbewegung die Wechselmagazine W gegeneinander aus.

Die Beladestation B hat bevorzugt einen Drehantrieb 5, mit dem das Wechselmagazin W (siehe unten) zum Beladen gedreht wird. Währenddessen werden die Fügeelemente N, bspw. Stanzniete, über einen Elementvorschub 6 und eine bevorzugte Bremsstrecke 7 mittels Druckluft einer zu beladenden Kammer 12 der Wechselmatrize W zugeführt. Das Beladen des Wechselmagazins W erfolgt bevorzugt über eine oder eine Mehrzahl von Kammeröffnungen (siehe unten). Dazu werden mehrere Fügeelemente auch unterschiedlichen Typs über mehrere Zuführleitungen und/oder mittels Weichen gleichzeitig den mehreren Kammer- oder Ladeöffnungen zugeführt. Das Beladen mehrerer Kammern erfolgt bevorzugt gleichzeitig. Dazu wird zudem die Speicherplatte 10 schrittweise weiter gedreht, so dass nach einem weiteren Drehschritt wieder leere Kammern zum gleichzeitigen und/oder einzelnen Beladen zur Verfügung stehen. Sobald das Wechselmagazin W an das Setzgerät S übergeben worden ist, löst sich der Manipulator M von dem Wechselmagazin W, um an dieser Stelle ein neues Wechselmagazin W zum Befüllen aufnehmen zu können.

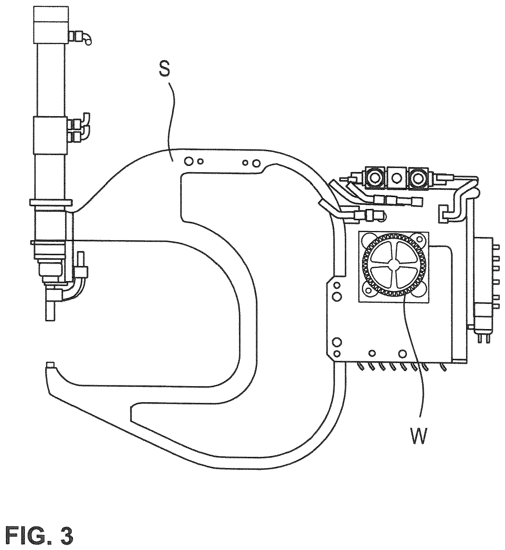

Fig. 3 zeigt in einer schematischen Seitenansicht das Setzgerät S mit einem angedockten Wechselmagazin W. Vorzugsweise wird das Wechselmagazin an der Konsole am C-Rahmen des Setzgeräts S angeordnet.

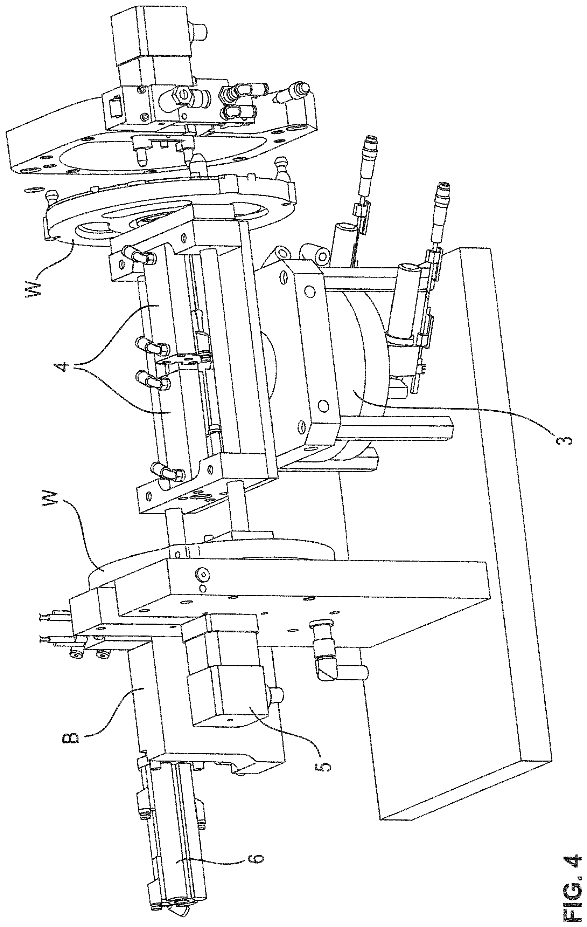

Eine vergrößerte Darstellung des Manipulators M aus Fig. 2 zeigt Fig.4. Durch eine Verlängerung des Linearantriebs 4 ist das Wechselmagazin W an der Beladestation B angedockt. Gleichzeitig wurde das andere Wechselmagazin W durch Verkürzen des Linearantriebs 4 vom Setzgerät S (nicht gezeigt) abgekoppelt, um es der Beladestation B zuführen zu können.

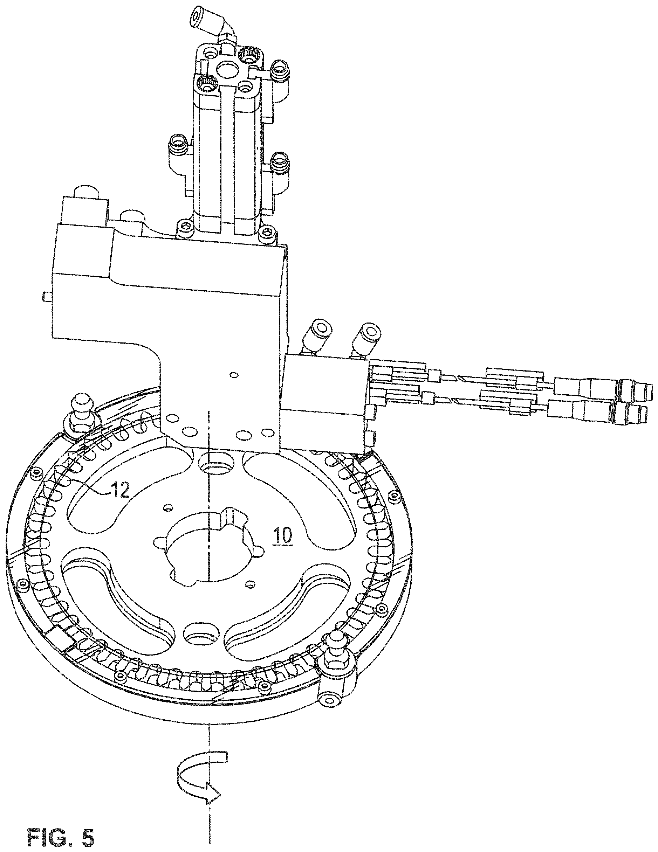

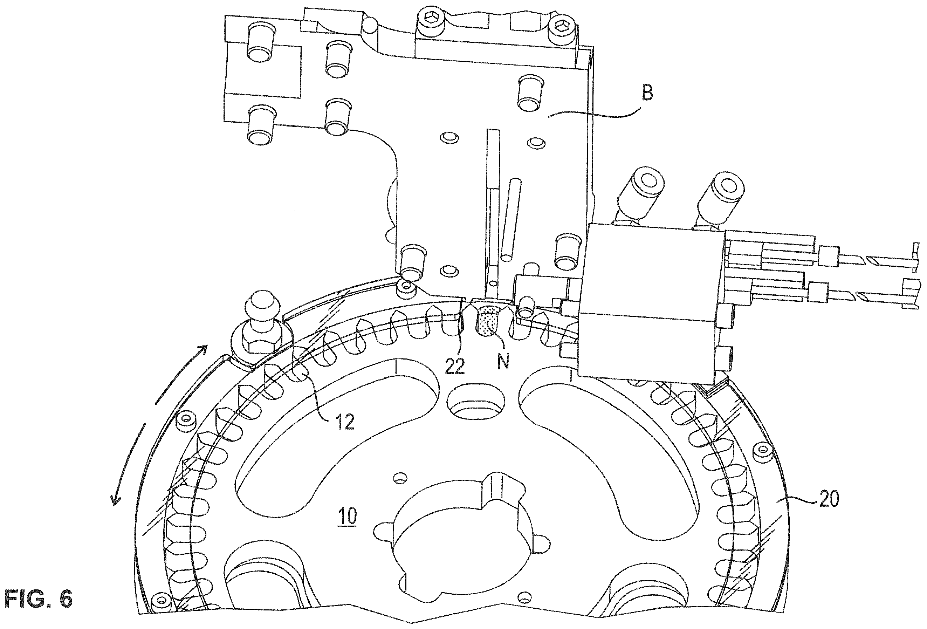

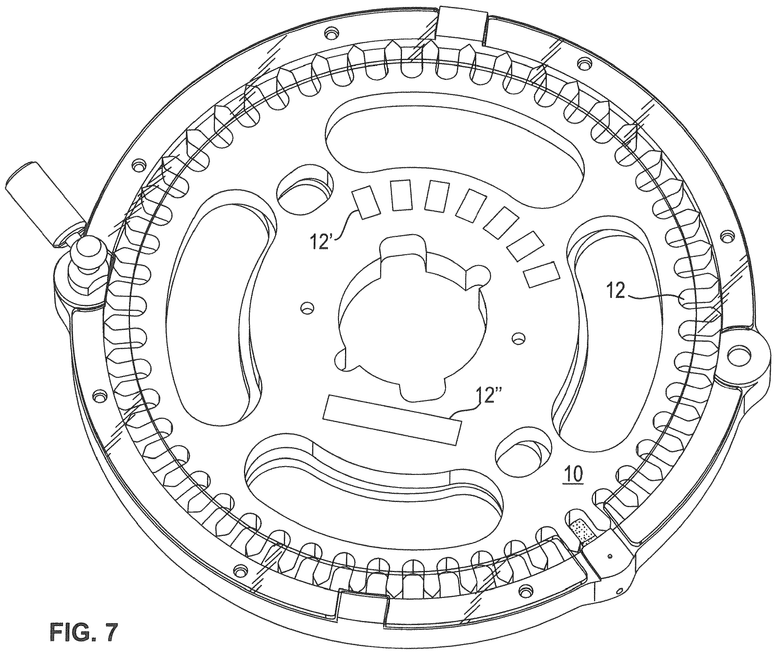

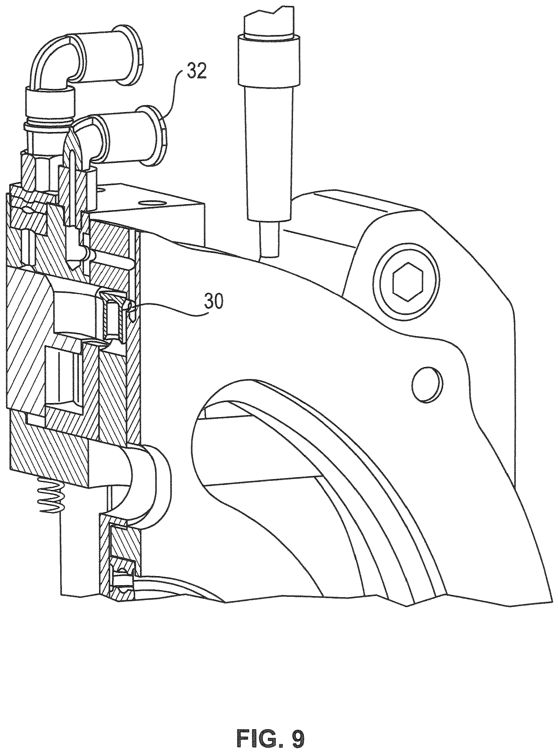

Die Figuren 5-7 zeigen verschiedene Ansichten des Wechselmagazins W, das in den Figuren 5, 6 und 9 mit der Beladestation B verbunden ist. Gemäß einer bevorzugten Ausführungsform vorliegender Erfindung umfasst das Wechselmagazin W eine Speicherplatte 10 mit einer Mehrzahl gleichmäßig bzw. definiert angeordneter Kammern 12. Definiert bedeutet in diesem Zusammenhang, dass die einzelnen Kammern durch eine Vorgabe oder bestimmte Bewegung der Komponenten des Wechselmagazins, wie Speicherplatte, Verschlusskomponente und Kammeröffnung, in ihrer Position festgelegt, wiederauffindbar und gezielt ansteuerbar sind. Gemäß der gezeigten Ausführungsform ist die Speicherplatte 10 rund und hat umfänglich angeordnete Kammern 12. Da die Speicherplatte 10 in einer käfig-artigen Anordnung 20 läuft, sind die Kammern 12 nahezu vollständig geschlossen. Dazu umgibt die käfig-artige Anordnung 20 die Speicherplatte 10 im radialen Randbereich annähernd vollständig. Die käfig-artige Anordnung 20 deckt zudem mit einem kragenähnlichen Abschnitt soweit die Kammern 12 ab, dass geladene Fügeelemente nicht herausfallen können.

Es ist ebenfalls bevorzugt, die Kammern 12 in konzentrischen Kreisen um den Mittelpunkt der Speicherplatte 10 anzuordnen, wie es am Bezugszeichen 12' gezeigt ist. Durch den Mittelpunkt der Speicherplatte 10 läuft ebenfalls die Drehachse der Speicherplatte 10, um die diese gedreht wird. Um aus den Kammern 12' die Fügeelemente zu entladen oder sie dort beladen zu können, ist es bevorzgut, die Kammeröffnung 22 bevorzugt mit einem Linearschieber oder Linearantrieb radial versetzbar anzuordnen. Gemäß einer weiteren bevorzugten Ausführungsform sind mehrere Fügeelemente in einem Langloch 12" angeordnet. In allen Kammern 12, 12', 12" sind die Fügeelemente vorzugsweise parallel oder senkrecht oder winklig mit einer Längsachse bezogen auf die Drehachse der Speicherplatte 10 angeordnet. Es ist ebenfalls bevorzugt, mehrere Fügeelemente in den Kammern 12, 12' oder 12" nebeneinander oder hintereinander anzuordnen. Um ein Entladen zu unterstützen, werden die mehreren Fügeelemente in einer Kammer 12, 12', 12" mittels Druckluft oder Federkraft einem Ende der Kammer 12, 12', 12" zugeführt, an welchem die Belade- und/oder Entladeöffnung 22 in die Kammer 12, 12', 12" mündet.

Unabhängig von der Form der Kammer 12, 12', 12" werden die Fügeelemente bevorzugt in axialer Richtung bezogen auf die Drehachse der Speicherplatte 10 entladen und/oder beladen.

Vorzugsweise wird die Speicherplatte 10 mit einem Schrittmotor gedreht, sodass die Kammern 12 einzeln der Beladestation B zuführbar sind. Zur Veranschaulichung ist in der Kammer 12 vor der Beladestation B ein Stanzniet N angeordnet. Man kann erkennen, dass oberhalb der Kammer 12 mit Stanzniet bzw. Fügeelement N die käfig-artige Anordnung 20 durchbrochen ist. Durch diese Kammeröffnung 22 wird die Zufuhr von Stanznieten N aus der Beladestation B in die unter der Kammeröffnung 22 angeordnete Kammer 12 ermöglicht. Somit bildet die käfig-artige Anordnung 20 eine Verschlusskomponente für die Mehrzahl von Kammern 12. Da sich die Speicherplatte 10 in Bezug auf die Kammeröffnung 22 relativ bewegen kann, ist die Kammeröffnung 22 über jeder Kammer 12 gezielt anordenbar.

Falls die Kammern 12 in konzentrischen Kreisen um den Mittelpunkt der Speicherplatte 10 angeordnet sind, dann müsste zunächst die Verschlusskomponente 20 auch radial versetzbar die Oberseite der Speicherplatte 10 abdecken. Die Kammeröffnung 22 wäre bevorzugt ein Schieber mit Öffnung (nicht gezeigt), sodass die Kammeröffnung radial einwärts und auswärts frei verschiebbar wäre. Damit könnten auch radial innen liegende Kammern beladen und entladen werden.

Gemäß einer weiteren bevorzugten Ausführungsform der Speicherplatte 10 ist diese eckig, bevorzugt viereckig ausgebildet (nicht gezeigt). Die Kammern 12 sind ähnlich Planquadraten gleichmäßig auf der Speicherplatte 10 verteilt angeordnet. Die käfig-artige Anordnung umgibt bevorzugt vollständig die eckige Speicherplatte 10. Die Kammeröffnung 22 ist in einem radialen Schieber angeordnet, sodass jede beliebig angeordnete Kammer der Speicherplatte über eine Drehung der Speicherplatte kombiniert mit einer linearen Bewegung der Kammeröffnung oder durch zwei nicht parallele lineare Bewegungen des Schiebers in der Ebene der Speicherplatte erreichbar ist.

An der Kammeröffnung 22 ist die Kammer 12 nur einseitig geöffnet. Im Speziellen wird das Fügeelement N bezogen auf die Drehachse der Speicherplatte 10 in axialer Richtung Be- und Entladen. Dazu dreht ein Schrittmotor die Speicherplatte 10 und damit die jeweils zu beladende Kammer 12 unter die Kammeröffnung 22. Da die Bewegung des Schrittmotors erfassbar ist, ist definiert, in welcher Kammer welcher Niet N abgelegt worden ist. Zu diesem Zweck wird der Niet N auch vor dem Entladen in seiner Länge gemessen oder es ist genau erfasst, aus welchem Niettyp-Reservoir der hier vorliegende Niet bzw. das Fügeelement N der Kammer 12 zugeführt worden ist. Somit enthält die gespeicherte Information im Hinblick auf die im Wechselmagazin W geladenen Fügeelemente N, welcher Fügeelement-Typ mit welcher Fügeelement-Größe in welcher Kammer 12 angeordnet ist.

Diese Information ist dann bevorzugt in einem RFID-Tag speicherbar, der an dem Wechselmagazin W angeordnet ist. Da das Wechselmagazin W gemeinsam mit dem RFID-Tag an das Setzgerät S übergeben wird, liest das Setzgerät G diese Informationen aus dem RFID-Tag aus, um dann gezielt den gewünschten Niettyp für die herzustellende Verbindung auszuwählen. In gleicher Weise kann diese Information zur Beladung des Wechselmagazins W in einem Industriecomputer gespeichert und an das Setzgerät S übermittelt werden. Es ist weiterhin bevorzugt, diese Informationen mittels Bluetooth-Verbindung zwischen Beladestation B und Setzgerät S und/oder zwischen Wechselmagazin W und Setzgerät S auszutauschen.

Wie man anhand der Figuren erkennen kann, ist die Speicherplatte 10 ausreichend dick, um die Fügeelemente N trotz ihres Schaft- und Kopfdurchmessers aufzunehmen. Gemäß einer weiteren bevorzugten Ausführungsform (nicht gezeigt) sind die Kammern mit ihrer Längsachse parallel zur Drehachse der Speicherplatte 10 angeordnet. Auch bei dieser Anordnung erfolgt das Be- und Entladen einseitig und an der Seitenfläche der Speicherplatte 10, da die Kammern nur einseitig offen sind.

Bevorzugt werden die Fügeelemente N über den Elementvorschub 6 der Kammer 12 unterhalb der Kammeröffnung 22 zugeschossen. Um die Fügeelemente N abführen zu können, ist vorzugsweise ein Druckluftanschluss 30 über die Druckluftleitung 32 in jeder Kammer 12 vorgesehen. Der Druckluftanschluss 30 mündet an der der Kammeröffnung 22 abgewandten Seite in die Kammer 12, um das Fügeelement N aus der Kammer 12 auszublasen. Auf diese Weise wird gerade am Setzgerät S die Zufuhr des Fügeelements N zum Fügekanal beschleunigt.

### Bezugszeichenliste

- B: Beladestation
- S: Setzgerät
- M: Manipulator
- W: Wechselmatrize
- 2: Bewegungsanordnung
- 3: Schwenkantrieb
- 4: Linearantrieb
- 5: Drehantrieb
- 6: Elementvorschub
- 7: Bremsstrecke
- 10: Speicherplatte
- 12: Kammer
- 20: käfigartige Anordnung
- 22: Kammeröffnung
- 30: Druckluftanschluss
- 32: Druckluftleitung

## Patentansprüche

1. Ein Wechselmagazin (W), in dem eine Mehrzahl von Verbindungselementen an einer Mehrzahl von definierten Positionen abführbar speicherbar ist, wobei das Wechselmagazin (W) mit einer Ladestation (B) und einem Setzgerät (S) zur Übergabe und Entnahme von Verbindungselementen verbindbar ist, wobei das Wechselmagazin (W) die folgenden Merkmale aufweist:
a. eine Speicherplatte (10) mit einer Mehrzahl definiert angeordneter und nur einseitig offener Kammern (12), deren Form an ein aufzunehmendes Verbindungselement, insbesondere an eine Art eines aufzunehmenden Verbindungselements, angepasst ist, sodass mindestens ein Verbindungselement darin lageorientiert speicherbar ist, und
b. eine Verschlusskomponente (20), wobei die Speicherplatte (10) und die Verschlusskomponente (20) gegeneinander drehbar und/oder schwenkbar und/oder verschiebbar sind, **dadurch gekennzeichnet, dass**
c. die Verschlusskomponente (20) eine relativ bewegbare Kammeröffnung (22) aufweist, die die Mehrzahl definiert angeordneter Kammern (12) derart verschließt, dass für ein Be- und Entladen der Mehrzahl definiert angeordneter Kammern (12) nur eine Kammer (12) geöffnet ist, da die Kammeröffnung (22) relativ zu der Mehrzahl von Kammern (12) bewegbar ist, so dass jede Kammer (23) gezielt anfahrbar, befüllbar oder ein dort gespeichertes Verbindungselement entnehmbar ist, wobei
d. die jeweilige Kammer (12) relativ zur Kammeröffnung (22) derart bewegbar ist, dass das kammerspezifische Be- und Entladen der jeweiligen Kammer (12) über die Kammeröffnung (22) erfolgt.

2. Wechselmagazin (W) gemäß Anspruch 1, in dem die Speicherplatte eine drehbare Scheibe mit einer Dicke parallel zu einer Drehachse ist und die Kammern (12) mit einer Längsachse parallel oder senkrecht zur Drehachse angeordnet sind.

3. Wechselmagazin (W) gemäß Anspruch 2, in dem die Kammern (12) in einem oder einer Mehrzahl konzentrischer Kreise und/oder spiralförmig und/oder strahlenförmig um die Drehachse und/oder matrixartig definiert angeordnet sind.

4. Wechselmagazin (W) gemäß Anspruch 3, deren Kammern (12) von einer Außenseite der Speicherplatte zugänglich angeordnet sind, wobei eine Längsachse der Kammer (12) parallel oder schräg oder senkrecht zur Drehachse der Speicherplatte (10) angeordnet ist, sodass ein Verbindungselement in einer Richtung parallel oder winklig zur Drehachse der Speicherplatte (10) zumindest aus einer definiert angeordneten Kammer (12) entfernbar ist, vorzugsweise auch einer definiert angeordneten Kammer (12) zuführbar ist.

5. Wechselmagazin (W) gemäß Anspruch 1, in dem die Speicherplatte (10) eckig ausgebildet ist und die Kammern (12) entlang von parallel und/oder senkrecht zueinander verlaufenden Geraden und/oder strahlenförmig bezogen auf einen Bezugspunkt der Speicherplatte (10) regelmäßig verteilt angeordnet sind.

6. Wechselmagazin (W) gemäß Anspruch 5, in dem die Speicherplatte (10) mit den definiert angeordneten Kammern (12) relativ zu der mindestens einen Kammeröffnung (22) mittels Schrittmotor und/oder Linearantrieb (4) bewegbar ist.

7. Wechselmagazin (W) gemäß Anspruch 1, in dem die Speicherplatte (10) mindestens eine langlochähnliche Kammer (12) aufweist, in der jeweils ein oder mehrere Verbindungselemente anordenbar sind, wobei mindestens ein Verbindungselement mit einer Längsachse senkrecht oder parallel oder winklig zur Drehachse der Speicherplatte (10) innerhalb der langlochähnlichen Kammer (12) anordenbar ist.

8. Wechselmagazin (W) gemäß einem der vorhergehenden Ansprüche, in dem die Kammern (12) jeweils einzeln oder in Gruppen oder gemeinsam mit einer Druckluftquelle verbindbar sind, sodass Luft in Entladerichtung in die Kammer (12) entgegen einer Beladerichtung einblasbar ist.

9. Ein Setzgerät (S) mit einem Wechselmagazin (W) gemäß einem der vorhergehenden Ansprüche.

10. Liefersystem zur Versorgung eines Setzwerkzeugs (S) mit einer Mehrzahl von Fügeelementen mithilfe eines Wechselmagazins (W) gemäß einem der vorhergehenden Ansprüche 1 bis 8, wobei das Liefersystem die folgenden Merkmale aufweist:
eine automatische Beladestation (B) mit mindestens einer Andockstelle für das Wechselmagazin (W) zum Beladen des Wechselmagazins (W) mit Fügeelementen aus einem oder mehreren Vorratsbehältern, wobei in den Vorratsbehältern jeweils eine Mehrzahl gleichartiger Verbindungselemente angeordnet sind oder ausgerichtet zur Verfügung steht, sodass die Verbindungselemente dem Wechselmagazin (W) zu einzelnen Kammern (12) oder zu Gruppen von Kammern (12) nacheinander einzeln oder als Mehrzahl zuführbar sind,
einen dreh- und/oder schwenkbaren- und/oder versetzbar angeordneten Manipulator (M), an dem mindestens ein Wechselmagazin (W) befestigbar und von dem das Wechselmagazin (W) lösbar ist, zum Andocken des zu beladenden Wechselmagazins (W) an der Beladestation (B), zum Abdocken des beladenen Wechselmagazins (W) von der Beladestation (B), vorzugsweise zum Halten mindestens eines beladenen und/oder zu beladenen Wechselmagazins (W), zum Andocken des beladenen Wechselmagazins (W) an dem Setzgerät (S) und zum Abdocken des entladenen Wechselmagazins (W) vom Setzgerät (S), wobei
das Wechselmagazin (W) die Speicherplatte (10) mit der Mehrzahl definiert angeordneter Kammern (12) und die Verschlusskomponente aufweist, in der die Verschlusskomponente die Mehrzahl definiert angeordneter Kammern (12) derart verschließt, dass zumindest für ein Entladen der Mehrzahl definiert angeordneter Kammern (12) nur eine Kammer (12) geöffnet ist, indem die Speicherplatte (10) und die Verschlusskomponente gegeneinander drehbar und/oder schwenkbar und/oder verschiebbar angeordnet sind, wobei
das Wechselmagazin (W) rotierbar scheibenartig und/oder versetzbar ist, sodass zumindest das Entladen der Kammern (12) am Setzwerkzeug (S) durch eine einzige für das Verbindungselement vorhandene Öffnung der jeweils in Entladeposition befindlichen Kammer (12) realisierbar ist.

11. Ein Verfahren zum Laden eines Setzgeräts (S) mithilfe eines Wechselmagazins (W) gemäß einem der vorhergehenden Ansprüche 1 bis 8, das die folgenden Schritte aufweist:
a. Füllen einer Mehrzahl von Kammern (12) des Wechselmagazins (W) einzeln oder in Gruppen jeweils mit einem und/oder einer Mehrzahl von Verbindungselementen an einer Beladestation (B),
b. Erfassen einer abrufbaren Information, welche Kammer (12) des Wechselmagazins (W) ein Verbindungselement welcher Art enthält,
c. Lösen des Wechselmagazins (W) von der Beladestation (B),
d. Verbinden des Wechselmagazins (W) mit einem Setzgerät (S) und
e. Übermitteln der abrufbaren Information an das Setzgerät (S), so dass zur Vorbereitung eines Fügevorgangs ein bestimmtes Fügeelement aus einer definierten Kammer (12) gezielt entladbar und dem Setzgerät (S) zuführbar ist.

12. Verfahren gemäß Anspruch 11, mit dem weiteren Schritt während des Beladens des Wechselmagazins (W):
elektronisches Erfassen, welches Verbindungselement in welcher Kammer (12) des Wechselmagazins (W) gespeichert ist, und Speichern der abrufbaren Information.

13. Verfahren gemäß Anspruch 11 mit dem weiteren Schritt:
Automatisches Überführen des Wechselmagazins (W) zwischen dem Setzgerät (S) und der Beladestation (B) mithilfe eines Manipulators (M).

14. Verfahren gemäß Anspruch 11 mit dem weiteren Schritt:
manuelles Überführen des Wechselmagazins (W) zwischen dem Setzgerät (S) und der Beladestation (B).

15. Verfahren zum Betrieb eines Setzgeräts (S) mit einem Wechselmagazin (W) nach einem der vorhergehenden Ansprüche 1 bis 8, das die folgenden Schritte aufweist:
a. Auswählen eines Verbindungselements passend für eine Fügeaufgabe aus einer Mehrzahl von Verbindungselementen, die in dem Wechselmagazin (W) gespeichert sind,
b. Entladen des ausgewählten Verbindungselements aus einer definiert angeordneten Kammer (12) des Wechselmagazins (W) basierend auf einer abrufbaren Information für das ausgewählte Verbindungselement in das Setzgerät (S) und
c. Herstellen einer Fügeverbindung mit dem ausgewählten Verbindungselement.

16. Verfahren nach Anspruch 15, wobei das Fügeelement aus einer Mehrzahl unterschiedlicher Fügeelemente ausgewählt und aus der entsprechenden Kammer (12) des Wechselmagazins (W) entnommen wird.

## Claims

1. A removable magazine (W) in which a plurality of connection elements is dischargeably storable at a plurality of defined positions, wherein the removable magazine (W) is connectable with a loading station (B) and a setting device (S) for transfer and removal of connection elements, wherein the removable magazine (W) comprises the following features:
a. a storage plate (10) having a plurality of defined arranged and only one-sided open chambers (12), the shape of which is adapted to a connection element to be received, especially to a type of a connection element to be received, so that at least one connection element is position-orientated storable therein, and
b. a closing component (20), wherein the storage plate (10) and the closing component (20) are rotatable and/or pivotable and/or movable with respect to each other, **characterized in that**
c. the closing component (20) comprises a relatively movable chamber opening (22) which closes the plurality of the defined arranged chambers (12) such that only one chamber (12) is opened for a loading and an unloading of the plurality of defined arranged chambers (12), as the chamber opening (22) is movable with respect to the plurality of chambers (12), so that every chamber (23) can be specifically reached, loaded or that a connection element stored therein can be specifically removed, wherein
d. the respective chamber (12) is movable with respect to the chamber opening (22) such that the chamber-specific loading and unloading of the respective chamber (12) takes place via the chamber opening (22).

2. Removable magazine (W) according to claim 1, in which the storage plate is a rotatable disk having a thickness parallel to a rotational axis and the chambers (12) are arranged with a longitudinal axis parallel or perpendicular to the rotational axis.

3. Removable magazine (W) according to claim 2, in which the chambers (12) are arranged defined in one or a plurality of concentric circles and/or spiral-like and/or radially around the rotational axis and/or matrix-like.

4. Removable magazine (W) according to claim 3, the chambers (12) of which are arranged accessibly from an outer side of the storage plate, wherein a longitudinal axis of the chamber (12) is arranged parallel or inclined or perpendicular to the rotational axis of the storage plate (10) so that a connection element can be removed in a direction parallel or angularly to the rotational axis of the storage plate (10) at least from one defined arranged chamber, and can preferably also be supplied to one defined arranged chamber (12).

5. Removable magazine (W) according to claim 1, in which the storage plate (10) is formed angularly and the chambers (12) are arranged regularly distributed along straight lines running parallel and/or perpendicular to each other and/or radially with respect to a reference point of the storage plate (10).

6. Removable magazine (W) according to claim 5, in which the storage plate (10) along with the defined arranged chambers (12) is movable relatively to the at least one chamber opening (22) by means of a stepping motor and/or a linear drive (4).

7. Removable magazine (W) according to claim 1, in which the storage plate (10) has at least one elongated hole-like chamber (12), in each of which one or several connection elements are arrangeable, wherein at least one connection element is arrangeable within the elongated hole-like chamber (12) with its longitudinal axis perpendicular or parallel or angularly to the rotational axis of the storage plate (10).

8. Removable magazine (W) according to one of the preceding claims, in which the chambers (12) are connectable individually or in groups or altogether, respectively, to a source of compressed air, so that air can be blown into the chamber (12) in an unloading direction against a loading direction.

9. A setting device (S) comprising a removable magazine (W) according to one of the preceding claims.

10. Supply system for supplying a setting tool (S) with a plurality of joining elements by means of a removable magazine (W) according to one of the preceding claims 1 to 8, wherein the supply system comprises the following features:
an automatic loading station (B) with at least one docking site for the removable magazine (W) to load the removable magazine (W) with joining elements from one or multiple supply containers, wherein within the supply containers, respectively, a plurality of similar connection elements is arranged or is available in an oriented manner so that the connection elements are suppliable to the removable magazine (W) to individual chambers (12) or to groups of chambers (12) individually one after the other or as a plurality,
a rotatable and/or pivotable and/or displaceably arranged manipulator (M) at which at least one removable magazine (W) is fastenable and from which the removable magazine (W) is releasable for docking the removable magazine (W) to be loaded to the loading station (B), for undocking the loaded removable magazine (W) from the loading station (B), preferably for holding at least one loaded removable magazine (W) and/or one removable magazine (W) to be loaded for docking the loaded removable magazine (W) to the setting device (S) and for undocking the unloaded removable magazine (W) from the setting device (S), wherein
the removable magazine (W) comprises a storage plate (10) having a plurality of defined arranged chambers (12) and a closure component, wherein the closure component closes the plurality of defined arranged chambers (12) such that at least for unloading the plurality of defined arranged chambers (12) only one chamber (12) is opened by means of arranging the storage plate (10) and the closure component rotatably and/or pivotably and/or displaceably with respect to each other, wherein
the removable magazine (W) is rotatably disk-like and/or displaceable, so that at least the unloading of the chambers (12) at the setting tool (S) is realizable via a single opening being present for the connection element stored in the chamber (12) being in the unloading position, respectively.

11. A method for loading a setting device (S) by means of a removable magazine (W) according to one of the preceding claims 1 to 8, comprising the following steps:
a. filling a plurality of chambers (12) of the removable magazine (W) individually or in groups, respectively, with one and/or a plurality of connection elements at a loading station (B),
b. sensing a retrievable information which chamber (12) of the removable magazine (W) contains a connection element of which type,
c. releasing the removable magazine (W) from the loading station (B),
d. connecting the removable magazine (W) with a setting device and
e. transmitting the retrievable information to the setting device (S) so that for the preparation of a joining process a specific joining element is specifically unloadable from a defined chamber (12) and is suppliable to the setting device (S).

12. Method according to claim 11 with the further step during the loading of the removable magazine (W):
electronically sensing which connection element is stored in which chamber (12) of the removable magazine, and storing the retrievable information.

13. Method according to claim 11, comprising the further step:
automatically transferring the removable magazine (W) between the setting device (S) and the loading station (B) by means of a manipulator (M).

14. Method according to claim 11, comprising the further step:
manually transferring the removable magazine (W) between the setting device (S) and the loading station (B).

15. A method for operating a setting device (S) with a removable magazine (W) according to one of the preceding claims 1 to 8, comprising the following steps:
a. selecting a connection element which is suitable for a joining task from a plurality of connection elements which are stored in the removable magazine (W),
b. unloading the selected connection element from a defined arranged chamber (12) of the removable magazine (W) into the setting device (S) based on a retrievable information for the selected connection element and
c. establishing a joining connection with the selected connection element.

16. Method according to claim 15, wherein the joining element is selected from a plurality of different joining elements and is removed from the respective chamber (12) of the removable magazine (W).

## Revendications

1. Chargeur (W), dans lequel une pluralité d'éléments d'assemblage peuvent être stockés de manière à pouvoir être évacués à une pluralité de positions définies, le chargeur (W) pouvant être relié à une station de chargement (B) et à un appareil de pose (S) pour la remise et le retrait d'éléments d'assemblage, le chargeur (W) présentant les caractéristiques suivantes :
a. une plaque de stockage (10) avec une pluralité de chambres (12) ouvertes d'un seul côté et disposées de façon définie, dont la forme est adaptée à un élément d'assemblage à accueillir, en particulier à une sorte d'élément d'assemblage à accueillir, de telle façon qu'au moins un élément d'assemblage peut être stocké dans celles-ci en étant orienté en position,
b. un composant de fermeture (20), la plaque de stockage (10) et le composant de fermeture (20) pouvant tourner et/ou pivoter et/ou coulisser l'un par rapport à l'autre, **caractérisé en ce que**
c. le composant de fermeture (20) présente une ouverture de chambre (22) relativement déplaçable, laquelle ferme la pluralité de chambres disposées de façon définie (12) de telle manière, que seule une chambre (12) est ouverte pour le chargement et le déchargement de la pluralité de chambres disposées de façon définie (12), étant donné que l'ouverture de chambre (22) est déplaçable par rapport à la pluralité de chambres (12), de sorte que chaque chambre (23) peut être approchée et remplie de façon ciblée ou qu'un élément d'assemblage stocké dans celle-ci peut en être retiré, dans lequel
d. la chambre (12) respective peut être déplacée de telle façon par rapport à l'ouverture de chambre (22), que le chargement et le déchargement spécifiques à la chambre de la chambre (12) respective sont effectués par le biais de l'ouverture de chambre (22).

2. Chargeur (W) selon la revendication 1, dans lequel la plaque de stockage est un disque rotatif avec une épaisseur parallèle à un axe de rotation et les chambres (12) sont disposées avec un axe longitudinal parallèle ou perpendiculaire à l'axe de rotation.

3. Chargeur (W) selon la revendication 2, dans lequel les chambres (12) sont disposées de façon définie en un ou plusieurs cercles concentriques et/ou en forme de spirale et/ou radialement autour de l'axe de rotation et/ou à la manière d'une matrice.

4. Chargeur (W) selon la revendication 3, dont les chambres (12) sont disposées de façon à être accessibles depuis un côté extérieur de la plaque de stockage, dans lequel un axe longitudinal de la chambre (12) est disposé parallèlement, obliquement ou perpendiculairement à l'axe de rotation de la plaque de stockage (10), de sorte qu'un élément d'assemblage peut être retiré au moins hors d'une chambre (12) disposée de façon définie, dans une direction parallèle ou inclinée par rapport à l'axe de rotation de la plaque de stockage (10), et peut de préférence être également amené vers une chambre (12) disposée de façon définie.

5. Chargeur (W) selon la revendication 1, dans lequel la plaque de stockage (10) est formée de façon angulaire et les chambres (12) sont disposées de manière à être réparties de façon homogène le long de lignes s'étendant parallèlement et/ou perpendiculairement les unes aux autres et/ou radialement par rapport à un point de référence de la plaque de stockage (10).

6. Chargeur (W) selon la revendication 5, dans lequel la plaque de stockage (10) est déplaçable avec les chambres (12) disposées de façon définie par rapport à l'au moins une ouverture de chambre (22) à l'aide d'un moteur pas à pas et/ou d'un entraînement linéaire (4).

7. Chargeur (W) selon la revendication 1, dans lequel la plaque de stockage (10) présente au moins une chambre oblongue (12), dans laquelle un ou plusieurs éléments d'assemblage peuvent être disposée respectivement, l'un au moins des éléments d'assemblage pouvant être disposé avec un axe longitudinal perpendiculaire ou parallèle ou incliné par rapport à l'axe de rotation de la plaque de stockage (10) à l'intérieur de la chambre oblongue (12).

8. Chargeur (W) selon l'une des revendications précédentes, dans lequel les chambres (12) peuvent être reliées respectivement séparément ou par groupes ou ensemble à une source d'air comprimé, de telle façon que de l'air peut être soufflé dans la direction de déchargement dans la chambre (12) contre une direction de chargement.

9. Appareil de pose (S) comprenant un chargeur (W) selon l'une des revendications précédentes.

10. Système de distribution pour l'approvisionnement d'un appareil de pose (S) avec une pluralité d'éléments de jonction à l'aide d'un chargeur (W) selon l'une des revendications précédentes 1 à 8, dans lequel le système de distribution présente les caractéristiques suivantes :
- une station de chargement automatique (B) comprenant au moins un point de connexion pour le chargeur (W) en vue du chargement du chargeur (W) avec les éléments de jonction à partir d'un ou de plusieurs récipients de stockage, une pluralité d'éléments d'assemblage similaires étant disposés respectivement dans les récipients de stockage ou mis à disposition de façon orientée, de telle façon que les éléments d'assemblage peuvent être fournis au chargeur (W) vers des chambres (12) séparées ou vers des groupes de chambres (12) séparément les uns après les autres ou à plusieurs,
- un manipulateur (M) disposé de façon rotative et/ou pivotante et/ou déplaçable, auquel au moins un chargeur (W) peut être fixé et par rapport auquel le chargeur (W) peut être détaché, pour la connexion du chargeur (W) à charger à la station de chargement (B), pour le détachement du chargeur chargé (W) de la station de chargement (B), de préférence pour le maintien d'au moins un chargeur (W) chargé et/ou à charger, pour la connexion du chargeur (W) chargé à l'appareil de pose (S) et pour le détachement du chargeur (W) déchargé de l'appareil de pose (S), dans lequel
- le chargeur (W) présente la plaque de stockage (10) avec la pluralité de chambres (12) disposées de façon définie et le composant de fermeture, le composant de fermeture fermant la pluralité de chambres disposées de façon définie (12) de telle façon que seule une chambre (12) est ouverte au moins pour un déchargement de la pluralité de chambres disposées de façon définie (12), du fait que la plaque de stockage (10) et le composant de fermeture sont disposés de façon à pouvoir tourner et/ou pivoter et/ou coulisser l'un par rapport à l'autre, dans lequel
- le chargeur (W) peut tourner à la manière d'un disque et/ou se déplacer, de sorte que le déchargement au moins des chambres (12) vers l'appareil de pose (S) peut être réalisé par une seule ouverture, disponible pour l'élément d'assemblage, de la chambre (12) se trouvant respectivement en position de déchargement.

11. Procédé pour le chargement d'un appareil de pose (S) à l'aide d'un chargeur (W) selon l'une des revendications 1 à 8, présentant les étapes suivantes :
a. remplissage d'une pluralité de chambres (12) du chargeur (W) séparément ou par groupes respectivement avec un et/ou une pluralité d'éléments d'assemblage auprès d'une station de chargement (B),
b. détection d'une information consultable, pour savoir quelle chambre (12) du chargeur (W) contient un élément d'assemblage de quel type,
c. détachement du chargeur (W) de la station de chargement (B),
d. assemblage du chargeur (W) avec un appareil de pose (S), et
e. transmission de l'information consultable à l'appareil de pose (S), de telle façon qu'un certain élément de jonction peut être déchargé de façon ciblée à partir d'une chambre (12) définie pour la préparation d'une opération de jonction, et amené vers l'appareil de pose (S).

12. Procédé selon la revendication 11, comprenant l'étape supplémentaire suivante pendant le chargement du chargeur (W) :
- détection électronique, pour savoir quel élément d'assemblage est stocké dans quelle chambre (12) du chargeur (W), et enregistrement de l'information consultable.

13. Procédé selon la revendication 11, comprenant l'étape supplémentaire suivante :
- transfert automatique du chargeur (W) entre l'appareil de pose (S) et la station de chargement (B) à l'aide d'un manipulateur (M).

14. Procédé selon la revendication 11, comprenant l'étape supplémentaire suivante :
- transfert manuel du chargeur (W) entre l'appareil de pose (S) et la station de chargement (B).

15. Procédé pour le fonctionnement d'un appareil de pose (S) avec un chargeur (W) selon l'une des revendications précédentes 1 à 8, présentant les étapes suivantes :
a. sélection d'un élément d'assemblage adapté pour une tâche de jonction à partir d'une pluralité d'éléments d'assemblage stockés dans le chargeur (W),
b. déchargement de l'élément d'assemblage sélectionné hors d'une chambre disposée de façon définie (12) du chargeur (W) sur la base d'une information consultable pour l'élément d'assemblage sélectionné dans l'appareil de pose (S), et
c. réalisation d'un assemblage par jonction avec l'élément d'assemblage sélectionné.

16. Procédé selon la revendication 15, dans lequel l'élément de jonction est sélectionné parmi une pluralité d'éléments de jonction différents et retiré de la chambre (12) correspondante du chargeur (W).
